# EUROPEAN PATENT SPECIFICATION

(11) **EP 2 497 908 B1**
(45) Date of publication and mention of the grant of the patent: **21.09.2016**
(21) Application number: 12156803.4
(22) Date of filing: 24.02.2012
(51) Int. Cl.: F01D 11/00, F01D 25/14, F02C 7/18, F02C 9/18

(54) **A conduit for bleed air in a gas turbine engine**
Leitung für Luftabzweigung in einem Gasturbinenmotor
Conduit de prélèvement d'air d'un moteur à turbine à gaz

(30) Priority: 10.03.2011 GB 201104043
(43) Date of publication of application: 12.09.2012
(73) Proprietor: Rolls-Royce plc, London SW1E 6AT (GB)
(72) Inventor: Badcock, Gawain Charles Raydon, Derby, DE73 6UP (GB); Goulds, Roberts, Belper, Derbyshire DE56 1DZ (GB); Bewick, Clare Lindsay, Belper, Derbyshire DE56 0HG (GB); Peace, Richard, Derby, DE72 3GP (GB)
(74) Representative: Rolls-Royce plc

(56) References cited:
- EP-A2- 2 236 772
- WO-A1-03/037715
- GB-A- 2 445 237
- US-A1- 2008 080 967
- US-B1- 6 202 403

## Description

This invention relates to a gas turbine engine and is particularly, although not exclusively, concerned with an air ducting system for ducting cooling air from a bypass duct to locations at which cooling is required.

Ducted fan jet engines for aircraft applications have a core engine, having an engine inner casing, located within an engine outer casing or cowl. The engine fan blades and at least part of the cowl are further surrounded by a nacelle which is spaced from the cowl to provide a bypass duct about the core engine through which compressed air is forced by the fan blades.

A cavity is defined between the engine inner casing and the cowl. The difference in profile between the core engine and the nacelle results in a cavity of considerable volume, in which it is known to mount auxiliary equipment, which may be accessories such as sensors and electrical or electronic components, so as to make efficient use of the available space. The cavity may be referred to as the engine compartment or fire zone.

A gas turbine engine produces a significant amount of heat during use, particularly from the combustors, which results in greatly elevated temperatures within the cavity. The accessories mounted within the cavity are heat sensitive to a greater or lesser extent and can be damaged or degraded at the operating temperatures which would prevail in the cavity in the absence of cooling measures. Whilst steps have been taken to produce accessories which can withstand such elevated temperatures without imminent failure, it is well-known that the increased temperatures can impact on the operational life of such components.

In view of the above problem, it is known to provide a ventilation system for the cavity by directing cooling air from the engine bypass onto the engine casing and/or components 28 mounted thereon. This is achieved by providing separate ventilation openings in the cowl for each region or component that is to be cooled. Ducting may be provided to duct the introduced air to the location where it is required. To ensure effective cooling at locations within the cavity, the ventilation openings have tended to be situated as close as possible to the location or component to be cooled, which entails providing the ventilation openings in the cowl close to the region of the combustors. Finding space for the ventilation openings in the cowl is difficult, since it is necessary to avoid locations occupied by other features of the engine, such as bifurcations, bleed ports, V-groove edges and thrust reverser components. Furthermore, the forming of openings in the cowl affects the structural integrity and noise suppression capability of the cowl, and the variety of separate dedicated openings in the cowl results in the need for a large number of parts to establish the cooling function.

US patent publication 2008080967 shows an inlet assembly configured to ingest bypass air, and direct air to first and second pipes. EP2236772 discloses an active tip clearance control system comprising an annular plenum having an inlet configured to receive bypass air, and a vent passage in communication with the atmosphere.

The core engine may undergo large movements relative to the cowl in operation, and consequently there may be significant movement between each ventilation opening and the respective location or component to be cooled. Measures therefore need to be taken to ensure adequate sealing between the opening and any ducting that conveys the cooling air to the required location or component. This requires complex sealing arrangements and introduces the potential for leakage, which can also affect the fire resistance of the cowl.

In many instances the ventilation openings need to be situated downstream of components such as bleed valves and surface heat exchangers, which can cause hot air to be ingested by the openings. The failure of a heat exchanger can result in oil being ingested, which can create a substantial fire risk should the oil come into contact with the hot engine inner casing.

Future engines are expected to have greater cooling requirements than current engines and so, on the basis of current designs, will require even more ventilation openings in the cowl.

According to the present invention there is provided a gas turbine engine having a bypass duct having an inner airwashed surface defined at least partly by a core engine cowl which is disposed within the bypass duct and defines with an engine inner casing an annular cowl cavity, a plenum being provided within the cowl cavity and communicating through at least one opening in the inner airwashed surface with the bypass duct, a plurality of conduits extending within the cowl cavity from the plenum, each of which is connected separately to the plenum and extends to a respective location in the cowl cavity, characterised in that the plenum is of annular form extending about the engine axis, wherein the inner engine casing has a forward core fairing which provides part of the inner airwashed surface, the plenum being disposed within the forward core fairing.

The interior of the plenum may be isolated from the cowl cavity by a partition. The partition may support an end of the conduit.

The conduit may have means, such as an orifice or control valve, for controlling flow from the plenum along the conduit. The conduit may extend from the plenum to a point of use within the engine, which point of use may be the location of auxiliary equipment of the engine.

The forward core fairing may meet the core engine cowl at a junction, the inner airwashed surface having a substantially continuous profile across the junction. The opening in the inner airwashed surface may be provided in an outer wall of the forward core fairing.

Where the cowl cavity accommodates auxiliary equipment in the form of engine accessories, the conduits, or at least some of the conduits, may extend to respective ones of the accessories.

While a single opening may be provided in the airwashed surface to supply air from the bypass duct to the plenum, in one embodiment the opening is one of a plurality of openings distributed about the engine axis.

For a better understanding of the present invention, and to show more clearly how it may be carried into effect, reference will now be made, by way of example, to the accompanying drawings, in which:
Figure 1 is a schematic representation of a gas turbine engine;
Figure 2 is a partial sectional view of a cowl cavity of a gas turbine engine in accordance with the present invention;
Figure 3 is an enlarged view of part of Figure 2; and
Figure 4 is a view in the forward direction of the core cavity of Figures 2 and 3.

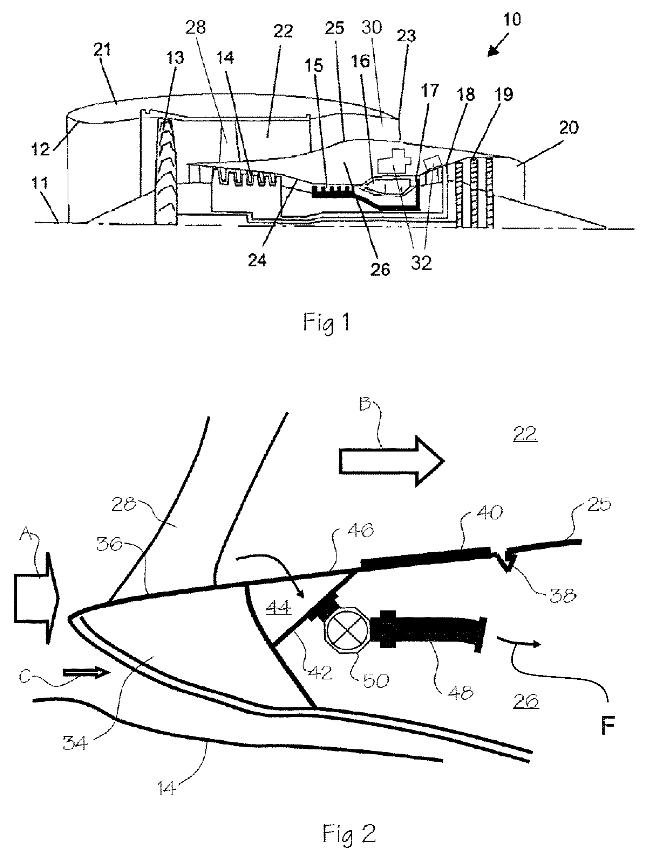

With reference to Figure 1, a ducted fan gas turbine engine generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and a core engine exhaust nozzle 20. A nacelle 21 generally surrounds the engine 10 and defines the intake 12, a bypass duct 22 and a bypass exhaust nozzle 23. The nacelle 21 and the core engine 10 are interconnected by forward and aft struts 28, 30.

The gas turbine engine 10 works in a conventional manner so that air entering the intake is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive, the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

The core engine is closely surrounded by an inner casing 24. It can be seen in Figure 1 that the profile of the engine core is different from that of the aerodynamic profile of the nacelle 21. Accordingly an outer casing or cowl 25 is provided around the engine to improve the aerodynamics of the engine. An internal volume 26, referred to in this specification as a cowl cavity 26, is enclosed between the inner casing 24 and cowl 25. The cavity 26 is generally annular in section although the specific dimensions and profile of the cavity may vary between engines based upon a number of design considerations. The cavity 26 accommodates auxiliary equipment of the invention, represented schematically in Figure 1 as accessories 32, which may be sensors and electrical or electronic components.

Whilst the description proceeds in relation to the cavity 26 located about the engine of a three-shaft turbofan engine, it will be appreciated by those skilled in the art that the invention may be applied to any format of gas turbine engine in which a cavity exists about the core engine, such as, for example a two-shaft engine.

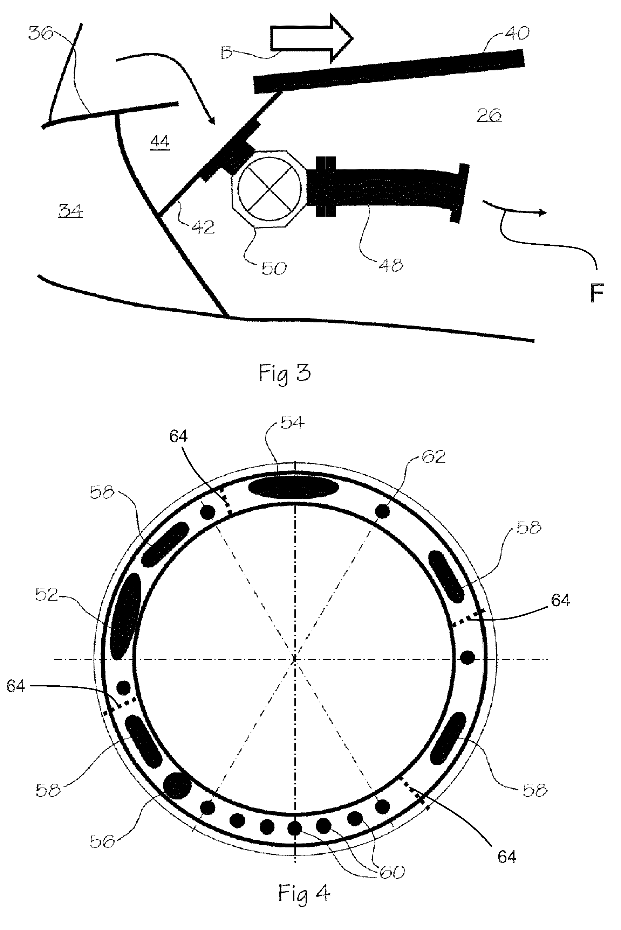

Figures 2 and 3 show the forward end of the cowl cavity 26. The intermediate compressor 14 is represented only schematically. As shown in Figure 2, the total air flow A from the fan 13 is divided into a bypass flow B and a compressor intake flow C. The forward end of the engine inner casing 24 is provided with a forward core fairing 34 which includes a radially outer surface 36 which, with the outer surface of the cowl 25 constitutes the radially inner airwashed surface of the bypass duct 22. The fairing 34 can be considered to be part of the inner casing 24 and as such is a structural component. By contrast, the cowl 25 is provided primarily to provide a desired aerodynamic profile for the inner wall of the bypass duct 22, and has limited structural strength. The fairing 34 adjoins the cowl 25 at a V-groove junction 38, and it will be appreciated that the airwashed surface is substantially continuous across the junction 38. Just forward of the junction 38, the fairing 34 carries a surface heat exchanger 40.

The interior of the fairing 34 is partitioned by means of a partition or bulkhead 42 to form a plenum 44 which is isolated from the remainder of the cavity 26. The plenum 44 communicates with the bypass duct 22 through a circumferential array of openings 46 distributed around the airwashed surface 36. The openings 46 may be plain apertures in the wall of the fairing 34, but they may have a more complex configuration to provides ram scoops or other ducting arrangements to enhance the flow rate into the plenum 44, or to utilise the dynamic pressure of the air flowing in the bypass duct 22 to increase the pressure of the air within the plenum 44. The openings 46 can be adjustable, for example by means of a variable inlet mechanism. The openings 46 may take any suitable form. For example, they may be in the form of an array of inlet slots each extending axially with respect to the engine axis, or annular slots extending around the engine axis. The precise configuration of the openings 46 will be determined on the basis of constraints imposed by the engine design, and the flow rate and pressure requirements within the plenum 44.

Conduits 48 are provided within the cavity 26. At one end, each conduit 48 is supported on the partition 42 and communicates with the plenum 44. A control valve 50 is provided for controlling the flow of air through the conduit 48. The control valve 50 may be adjustable to enable variation in the flow rate of air along the conduit 48, or alternatively may provide a simple on-off function. In addition, or instead of, the control valve 50, a fixed orifice may be provided in the conduit 48 for flow regulation purposes.

As indicated by an arrow F, the conduit 48 provides a flow of air from the plenum 44 through the cavity 26 to a desired location, for example to cool accessories such as the accessories 32 shown in Figure 1.

Figure 4 is a schematic view in the forward direction of the partition 42, and indicates, by way of example, locations for the attachment of the conduits 48 to the partition 42. Thus, for example, separate conduits may be provided at locations 52, 54 and 56 for individual cooling systems for locations or components within the cavity 26. Further conduits may be attached at locations 58 for providing enhanced cooling for a specific cooling system where a single conduit provides inadequate flow, or where a modulation of the cooling effect is to be achieved by varying the number of the respective conduits which are open to flow. Further locations 60 are provided for ventilation of core systems, and yet a further opening 62 for zone ventilation purposes, for example for ventilated fire zones of the engine to avoid the build-up of flammable gases.

Figure 4 also shows a series of bulkheads 64 which can be incorporated where required to separate the plenum 44 into different sectors. Such separation may be required, for example, to maintain separation between different systems receiving air from the plenum 44, or to provide system redundancy so that, for example, in the event of a leak in one part of the plenum 44 adequate cooling flow can be maintained from other parts of the plenum 44.

It will be appreciated from Figure 2, that, by situating the openings 46 upstream of the cowl 25 and the hot engine components such as the combustor 16, the openings 46, the plenum 44 and the valves 50 are provided in a relatively cool, benign environment, so reducing degradation of their function as a result of high temperature. Because the fairing 34, including the partition 42, is part of the engine inner casing 24, it is a structural component and consequently is able to provide adequate support to the connections of the conduits 48 to the partition 42. The positioning of the openings 46 just forward of the heat exchangers 40 means that the aft edges of the openings 46 are relatively warm, so that icing of any opening and closing mechanisms for the openings 46 is avoided.

Because separate conduits 48 are provided for the respective cooling requirements within the cavity 26, each conduit 48 can be sized for the specific system which it is supplying. The openings 46 can be configured to be aerodynamically efficient, creating less parasitic spillage than the provision of numerous separate inlet openings provided at various positions on the cowl 25. The positioning of the openings 46 means that they are upstream of many of the aerodynamic obstructions and hot effluxes which are typically found on engine cowls, such as the heat exchangers 40, bleed valves and thrust reverser mechanisms. This enhances the aerodynamic performance of the openings 46, and ensures that the air entering the plenum 44, and passing along the conduits 48, is at a low temperature. Since the cowl 25 is not interrupted by cooling air openings, the constraints on the design on the cowl 25 are reduced, and the cowl 25 can be made lighter and more robust, with fewer edges at which failure may be initiated. Furthermore, a greater area of the cowl 25 is available for the installation of noise suppression measures.

The total flow area of the openings 46 can be sized to accommodate the total maximum flow rate required by all systems supplied by the conduits 48. Consequently, spillage losses resulting from flow through dedicated openings in excess of the requirements of the respective systems supplied by those openings is minimised.

Because the valves 50 can be supported in a stable manner from the partition 42, at a position forward of major sources of heat generation, they may be operated by actuators which are not suitable for high temperature operation, such as electrical actuators.

The invention may also be applied to circumstances in which the fluid under consideration is a fluid other than air, and may also be applied to static gas turbine installations.

## Claims

1. A gas turbine engine (10) having a bypass duct (22) having an inner airwashed surface defined at least partly by a core engine cowl (25) which is disposed within the bypass duct (22) and defines with an engine inner casing (24) an annular cowl cavity (26), a plenum (44) being provided within the cowl cavity (26) and communicating through at least one opening (46) in the inner airwashed surface with the bypass duct (22), a plurality of conduits (48) extending within the cowl cavity (26) from the plenum (44), each of which is connected separately to the plenum and extends to a respective location in the cowl cavity, **characterised in that** the plenum is of annular form extending about the engine axis, wherein the inner engine casing (24) has a forward core fairing (34) which provides part of the inner airwashed surface, the plenum (44) being disposed within the forward core fairing (34).

2. A gas turbine engine as claimed in claim 1, in which the interior of the plenum (44) is isolated from the cowl cavity (26) by a partition (42).

3. A gas turbine engine as claimed in claim 2, in which the partition (42) supports an end of the conduit (48).

4. A gas turbine engine as claimed in any one of the preceding claims, in which the conduit (48) is provided with flow control means comprising a valve (50).

5. A gas turbine engine as claimed in any one of the preceding claims, in which the conduit (48) extends from the plenum (44) to a point of use (32) within the engine (10).

6. A gas turbine engine as claimed in claim 5, in which the point of use comprises auxiliary equipment (32) of the engine (10) situated within the cowl cavity (26).

7. A gas turbine engine as claimed in any of the preceding claims, in which the forward core fairing (34) meets the core engine cowl (25) at a junction (38), the inner airwashed surface having a substantially continuous profile across the junction (38).

8. A gas turbine engine as claimed in any of the preceding claims, in which the opening (46) in the inner airwashed surface is provided in an outer wall of the forward core fairing (34).

9. A gas turbine engine as claimed in claim 6, in which the auxiliary equipment (32) comprises engine accessories, the conduits (48), or at least some of the conduits, extending to respective ones of the accessories.

10. A gas turbine engine as claimed in any one of the preceding claims, in which the opening (46) is one of a plurality of openings (46) distributed about the inner airwashed surface and communicating with the plenum (44).

## Patentansprüche

1. Gasturbinentriebwerk (10) mit einem Umgehungskanal (22) mit einer inneren, luftgewaschenen Oberfläche, die wenigstens teilweise von einer Kerntriebwerksstirnwand (25) definiert ist, die innerhalb des Umgehungskanals (22) angebracht ist und mit einem inneren Triebwerksgehäuse (24) eine ringförmige Stirnwandvertiefung (26) definiert, wobei innerhalb der Stirnwandvertiefung (26) ein Zwischenraum (44) bereitgestellt ist und durch wenigstens eine Öffnung (46) in der inneren, luftgewaschenen Oberfläche mit dem Umgehungskanal (22) im Austausch steht, wobei sich innerhalb der Stirnwandvertiefung (26) von dem Zwischenraum (44) eine Vielzahl von Leitungen (48) erstreckt, von denen jede separat mit dem Zwischenraum verbunden ist und sich zu einer entsprechenden Stelle in der Stirnwandvertiefung erstreckt, **dadurch gekennzeichnet, dass**
der Zwischenraum eine ringförmige Form aufweist, die sich um die Triebwerksachse erstreckt, wobei das innere Triebwerksgehäuse (24) eine vordere Kernverkleidung (34) aufweist, die einen Teil der inneren luftgewaschenen Oberfläche bereitstellt, wobei der Zwischenraum (44) innerhalb der vorderen Kernverkleidung (34) angebracht ist.

2. Gasturbinentriebwerk nach Anspruch 1, wobei das Innere des Zwischenraums (44) durch eine Abtrennung (42) von der Stirnwandvertiefung (26) isoliert ist.

3. Gasturbinentriebwerk nach Anspruch 2, wobei die Abtrennung (42) ein Ende der Leitung (48) stützt.

4. Gasturbinentriebwerk nach einem der vorhergehenden Ansprüche, wobei die Leitung (48) mit Strömungs-Steuerungsmitteln ausgestattet ist, die ein Ventil (50) umfassen.

5. Gasturbinentriebwerk nach einem der vorhergehenden Ansprüche, wobei sich die Leitung (48) von dem Zwischenraum (44) zu einem Verwendungspunkt (32) innerhalb des Triebwerks (10) erstreckt.

6. Gasturbinentriebwerk nach Anspruch 5, wobei der Verwendungspunkt Zusatzausstattung (32) des Triebwerks (10) umfasst, die sich innerhalb der Stirnwandvertiefung (26) befindet.

7. Gasturbinentriebwerk nach einem der vorhergehenden Ansprüche, wobei die vordere Kernverkleidung (34) an einer Kreuzung (38) auf die Kerntriebwerksstirnwand (25) trifft, wobei die innere, luftgewaschene Oberfläche über die Kreuzung (38) ein im Wesentlichen durchgehendes Profil aufweist.

8. Gasturbinentriebwerk nach einem der vorhergehenden Ansprüche, wobei die Öffnung (46) in der inneren, luftgewaschenen Oberfläche in einer Außenwand der vorderen Kerntriebwerksverkleidung (34) bereitgestellt ist.

9. Gasturbinentriebwerk nach Anspruch 6, wobei die Zusatzausstattung (32) Triebwerkszusätze umfasst, wobei sich die Leitungen (48), oder wenigstens einige der Leitungen, zu den Entsprechenden von den Zusätzen erstrecken.

10. Gasturbine nach einem der vorhergehenden Ansprüche, wobei die Öffnung (46) eine von einer Vielzahl von Öffnungen (46) ist, die um die innere, luftgewaschene Oberfläche verteilt sind und mit dem Zwischenraum (44) im Austausch stehen.

## Revendications

1. Moteur à turbine à gaz (10) comportant un conduit de dérivation (22) comportant une surface intérieure lavée à l'air définie au moins partiellement par un capot (25) de bloc réacteur disposé à l'intérieur du conduit de dérivation (22) et définissant, conjointement avec une enveloppe intérieure (24) de moteur, une cavité annulaire (26) de capot, une chambre de tranquillisation (44) étant disposée à l'intérieur de la cavité (26) de capot et communiquant, par au moins une ouverture (46) ménagée dans la surface intérieure lavée à l'air, avec le conduit de dérivation (22), plusieurs conduites (48) s'étendant à l'intérieur de la cavité (26) de capot à partir de la chambre de tranquillisation (44), chacune d'entre elles étant individuellement raccordée à la chambre de tranquillisation et s'étendant jusqu'à une position respective dans la cavité de capot, **caractérisé en ce que**
la chambre de tranquillisation a une forme annulaire s'étendant autour de l'axe de moteur, dans lequel l'enveloppe intérieure (24) de moteur comporte un profilage avant (34) de noyau qui fournit une partie de la surface intérieure lavée à l'air, la chambre de tranquillisation (44) étant disposée à l'intérieur du profilage avant (34) de noyau.

2. Moteur à turbine à gaz selon la revendication 1, dans lequel l'intérieur de la chambre de tranquillisation (44) est isolé de la cavité (26) de capot par une séparation (42).

3. Moteur à turbine à gaz selon la revendication 2, dans lequel la séparation (42) supporte une extrémité de la conduite (48).

4. Moteur à turbine à gaz selon l'une quelconque des revendications précédentes, dans lequel la conduite (48) est pourvue d'un moyen de commande de flux comprenant une soupape (50).

5. Moteur à turbine à gaz selon l'une quelconque des revendications précédentes, dans lequel la conduite (48) s'étend de la chambre de tranquillisation (44) jusqu'à un point d'utilisation (32) situé à l'intérieur du moteur (10).

6. Moteur à turbine à gaz selon la revendication 5, dans lequel le point d'utilisation comprend un équipement auxiliaire (32) du moteur (10) situé à l'intérieur de la cavité (26) de capot.

7. Moteur à turbine à gaz selon l'une quelconque des revendications précédentes, dans lequel le profilage avant (34) de noyau rejoint le capot (25) de bloc réacteur au niveau d'une jonction (38), la surface intérieure lavée à l'air ayant un profil sensiblement continu de part et d'autre de la jonction (38).

8. Moteur à turbine à gaz selon l'une quelconque des revendications précédentes, dans lequel l'ouverture (46) ménagée dans la surface intérieure lavée à l'air est ménagée dans une paroi extérieure du profilage avant (34) de noyau.

9. Moteur à turbine à gaz selon la revendication 6, dans lequel l'équipement auxiliaire (32) comprend des accessoires de moteur, les conduites (48), ou au moins certaines des conduites, s'étendant vers les accessoires respectifs.

10. Moteur à turbine à gaz selon l'une quelconque des revendications précédentes, dans lequel l'ouverture (46) est l'une d'une pluralité d'ouvertures (46) réparties autour de la surface intérieure lavée à l'air et communiquant avec la chambre de tranquillisation (44).
